# EUROPÄISCHE PATENTANMELDUNG

(11) **EP 2 278 692 A2**
(43) Veröffentlichungstag der Anmeldung: **26.01.2011**
(21) Anmeldenummer: 10163145.5
(22) Anmeldetag: 18.05.2010
(51) Int. Cl.: H02K 16/02, H02K 23/26

(54) **Elektrischer Motor**

(30) Priorität: 22.07.2009 DE 102009034136
(71) Anmelder: Dunkermotoren GmbH, 79848 Bonndorf/Schwarzwald (DE)
(72) Erfinder: Pfendler, Klaus, 79848 Bonndorf (DE)
(74) Vertreter: Dreiss

(57) **Zusammenfassung**

Es wird ein elektrischer Motor (10) beschrieben, der mit einer Welle (16) versehen ist, auf der ein mit einer Mehrzahl von Spulen versehenes Wicklungspaket (15) angeordnet ist. Es sind zwei Kollektoren (17, 18) vorgesehen, die auf beiden Seiten des Wicklungspakets (15) auf der Welle (16) angeordnet sind.

## Beschreibung

Die Erfindung betrifft einen elektrischen Motor, insbesondere einen Gleichstrommotor.

Es sind permanenterregte Gleichstrommotoren bekannt, die als sogenannte Innenläufer ausgebildet sind. Ein derartiger Gleichstrommotor weist einen Rotor und einen Stator auf. Der Rotor ist aus einem Anker aufgebaut, der drehfest auf einer Welle gehalten ist und auf dem sich ein Wicklungspaket befindet. Ein mit dem Wicklungspaket verbundener Kollektor ist ebenfalls drehfest auf der Welle vorhanden. Der Stator besteht aus Permanentmagneten, die innerhalb eines Gehäuses koaxial zu der Welle angeordnet sind.

Bei Anwendungen, die erhöhte Anforderungen an die Sicherheit und Zuverlässigkeit stellen, beispielsweise bei der automatischen Betätigung von Brandschutztüren, ist es bekannt, sogenannte Doppel-Motoren einzusetzen. Bei dieser Vorgehensweise werden zwei vollständige Motoren derart miteinander gekoppelt, dass eine Redundanz und damit eine geringere Wahrscheinlichkeit für einen Totalausfall der gesamten Einrichtung erreicht wird. Beispiele für derartige Doppel-Motoren sind in DE 102 56 328 A1 und DE 102 56 329 A1 beschrieben.

Aufgabe der Erfindung ist es, einen elektrischen Motor zu schaffen, der erhöhte Zuverlässigkeitsanforderungen mit einem geringeren Aufwand erfüllt.

Die Erfindung löst diese Aufgabe durch einen elektrischen Motor nach dem Anspruch 1.

Dieser Motor ist mit einer Welle versehen, auf der ein mit einer Mehrzahl von Spulen versehenes Wicklungspaket angeordnet ist. Erfindungsgemäß sind zwei Kollektoren auf beiden Seiten des Wicklungspakets auf der Welle angeordnet.

Durch die erfindungsgemäße Anordnung von zwei Kollektoren wird eine erhöhte Zuverlässigkeit erreicht. Dies ergibt sich daraus, dass bei einem Defekt von beispielsweise einem der beiden Kollektoren es bei der Erfindung möglich ist, den Motor mit Hilfe des anderen Kollektors weiter zu betreiben. Entsprechendes gilt auch Bürstenhalterungen und Bürsten, die den beiden Kollektoren jeweils zugeordnet sind. Beispielsweise kann eine Brandschutztür von dem erfindungsgemäßen Motor auch dann noch geschlossen werden, wenn eines der vorgenannten Bauteile defekt ist.

Die erfindungsgemäße Anordnung der beiden Kollektoren auf unterschiedlichen Seiten des Wicklungspakets bringt den Vorteil mit sich, dass die beiden Kollektoren räumlich voneinander getrennt sind. Thermische Probleme bei einem der beiden Kollektoren, beispielsweise Überhitzungen von einem der beiden Kollektoren, haben somit nahezu keinen Einfluss auf den anderen Kollektor. Entsprechendes gilt wiederum auch für die jeweils zugeordneten Bürstenhalterungen und Bürsten.

Ein weiterer Vorteil der Anordnung der beiden Kollektoren auf beiden Seiten des Wicklungspakets besteht darin, dass die beiden Kollektoren im wesentlichen baugleich ausgeführt werden können. Entsprechendes gilt auch für Bürstenplatten, an denen die Bürstenhalterungen angebracht sind.

Weiterhin wird durch die erfindungsgemäße Anordnung der beiden Kollektoren auf unterschiedlichen Seiten des Wicklungspakets erreicht, dass die Bürstenhalterungen und insbesondere die Bürsten und deren elektrische Anschlüsse gut zugänglich sind. Somit ist es in einfacher Weise möglich, die Bürstenhalterungen mit den nach außen führenden elektrischen Kabeln zu verbinden.

Bei einer ersten Ausführungsform der Erfindung bilden die Spulen des Wicklungspakets eine einzige Motorwicklung, wobei die Spulen der einzigen Motorwicklung mit beiden Kollektoren elektrisch verbunden sind.

Bei dieser Ausführungsform der Erfindung sind die Kollektoren redundant ausgeführt. Die beiden Kollektoren mit den zugehörigen Bürstenhalterungen und Bürsten bilden dabei jeweils ein Kommutatorsystem. Damit sind die beiden Kommutatorsysteme ebenfalls zueinander redundant ausgeführt. Dies genügt zur Erlangung einer erhöhten Zuverlässigkeit. Insbesondere kann das eine der beiden Kommutatorsysteme verwendet werden, wenn das andere der beiden Kommutatorsysteme einen Defekt aufweist.

Bei einer zweiten Ausführungsform der Erfindung bilden die Spulen des Wicklungspakets zwei Motorwicklungen, wobei die Spulen der einen Motorwicklung mit dem einen Kollektor und die Spulen der anderen Motorwicklung mit dem anderen Kollektor elektrisch verbunden sind.

Bei dieser Ausführungsform der Erfindung sind nicht nur zwei unabhängige Kommutatorsysteme, sondern auch zwei unabhängige Motorwicklungen vorgesehen. Auf diese Weise kann eine noch weitergehende Zuverlässigkeit erreicht werden. Insbesondere kann die eine Motorwicklung mit dem zugehörigen Kommutatorsystem verwendet werden, wenn die andere Motorwicklung und/oder das andere Kommutatorsystem einen Defekt aufweist.

Bei einer vorteilhaften Weiterbildung der zweiten Ausführungsform wird in einem Normalbetrieb nur eine der beiden Motorwicklungen mit dem zugehörigen Kommutatorsystem verwendet. Die andere Motorwicklung mit dem zugehörigen Kommutatorsystem wird nur dann verwendet, wenn die erstgenannte Motorwicklung und/oder das erstgenannte Kommutatorsysteme einen Defekt aufweist. Damit ist es möglich, die erstgenannte Motorwicklung auf die Anforderungen des Normalbetriebs auszurichten, während die zweitgenannte Motorwicklung derart "kleiner" dimensioniert werden kann, dass sie im wesentlichen nur einen einmaligen Notbetrieb sicher ausführen kann.

Bei einer anderen vorteilhaften Weiterbildung der zweiten Ausführungsform werden in einem Normalbetrieb beide Motorwicklungen mit den zugehörigen Kommutatorsystemen parallel oder in Serie geschaltet. Der Normalbetrieb wird also mit Hilfe beider Motorwicklungen und beider zugehöriger Kommutatorsysteme realisiert. Dies kann durch eine entsprechende Parallel- und/oder Serienschaltung erreicht werden. Bei einem Defekt einer Motorwicklung und/oder eines Kommutatorsystems wird dann die andere Motorwicklung bzw. das andere Kommutatorsystem für den weiteren Betrieb herangezogen. Bei beiden vorgenannten Weiterbildungen kann es vorteilhaft sein, wenn die Anzahl der Windungen und/oder der Durchmesser des Wicklungsdrahts bei den beiden Motorwicklungen unterschiedlich ist. Auf diese Weise kann der Durchmesser des Wicklungsdrahts in einem Bereich vorgesehen werden, in dem einerseits der Wicklungsdraht noch ohne weiteres gewickelt werden kann, in dem aber andererseits der Wicklungsdraht auch noch ohne weiteres mit den Lamellen des Kollektors insbesondere verschweißt werden kann.

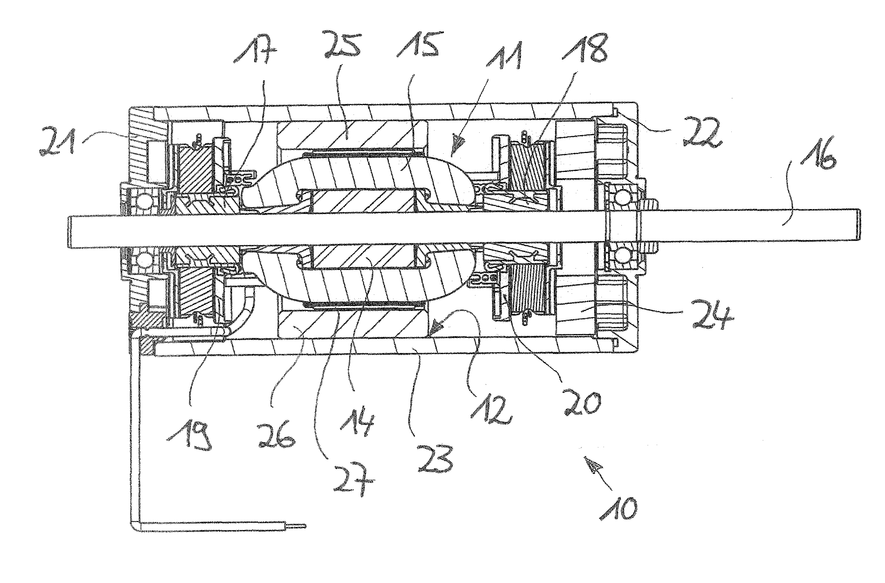

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt einen schematischen Längsschnitt durch ein Ausführungsbeispiel eines erfindungsgemäßen elektrischen Motors.

In der Zeichnung ist ein Motor 10 dargestellt, der häufig auch als permanenterregter Innenläufer-Gleichstrommotor bezeichnet wird. Der Motor 10 und damit auch die nachfolgend erläuterten Bauteile des Motors 10 sind im wesentlichen rotationssymmetrisch zur Drehachse des Motors 10 ausgebildet.

Der Motor 10 weist einen Rotor 11 und einen Stator 12 auf. Der Rotor 11 ist mit einem metallischen Anker 14 versehen, in dessen Nuten sich ein aus einer Mehrzahl von Spulen bestehendes Wicklungspaket 15 befindet. Der Anker 14 ist auf einer die Drehachse des Motors 10 bildenden Welle 16 drehfest gehalten.

Weiterhin ist benachbart zu beiden Seiten des Wicklungspakets 15 jeweils ein Kollektor 17, 18 auf der Welle 16 angeordnet, die beide drehfest mit der Welle 16 verbunden sind. Jeder der beiden Kollektoren 17, 18 weist eine Mehrzahl von Lamellen auf. Die einzelnen Spulen des Wicklungspakets 15 sind mit den einzelnen Lamellen der beiden Kollektoren 17, 18 elektrisch verbunden.

Jedem der beiden Kollektoren 17, 18 ist eine Bürstenplatte 19, 20 zugeordnet, an der jeweils zwei Bürstenhalterungen mit zugehörigen Bürsten angebracht sind. Die beiden Bürstenhalterungen sind einander gegenüberstehend angeordnet und die darin aufgenommenen Bürsten liegen an den Lamellen des jeweils zugehörigen Kollektors 17, 18 an. Weiterhin sind nach außen führende elektrische Kabel an die den Kollektoren 17, 18 zugeordneten Bürsten angeschlossen, über die an jeden der beiden Kollektoren 17, 18 eine Gleichspannung angelegt werden kann. Die Kabel sind dabei insbesondere auf derjenigen Seite des Wicklungspakets 15 nach außen geführt, auf der sich die Bürsten bzw. die zugehörigen Kollektoren 17, 18 befinden.

Der Kollektor 17, die zugehörigen Bürstenhalterungen, die darin aufgenommenen Bürsten und gegebenenfalls die angeschlossenen Kabel bilden ein zusammengehöriges erstes Kommutatorsystem. Entsprechend bilden der Kollektor 18, die zugehörigen Bürstenhalterungen, die darin aufgenommenen Bürsten und gegebenenfalls die angeschlossenen Kabel ein zusammengehöriges zweites Kommutatorsystem.

Die Welle 16 ist auf beiden Seiten des Wicklungspakets 15 benachbart zu den beiden Kollektoren 17, 18 in jeweils einem Lagerschild 21, 22 drehbar gelagert. Die beiden Lagerschilde 21, 22 sind ihrerseits in einem Gehäuse 23 gehalten, das den Rotor 11, die beiden Kollektoren 17, 18 und die beiden Bürstenplatten 19, 20 mit den Bürstenhalterungen umgibt. Die Bürstenplatten 19, 20 sind an den jeweils benachbart vorhandenen Lagerschilden 21, 22 gehalten. Weiterhin kann - sofern erforderlich - ein Abstandsteil 24 zwischen einem der Lagerschilde 21, 22 und der zugehörigen Bürstenplatte 19, 20 vorhanden sein.

Auf der dem Rotor 11 zugewandten Fläche des beispielsweise aus Stahl bestehenden Gehäuses 23 sind zwei Permanentmagnete 25, 26 befestigt, die zusammen mit dem Gehäuse 23 den Stator 12 bilden. Die beiden Permanentmagnete 25, 26 sind dem Anker 14 und dem Wicklungspaket 15 derart gegenüberstehend angeordnet, dass nur ein geringer Luftspalt 27 zwischen den genannten Bauteilen verbleibt.

Bei einer ersten Ausführungsform des Motors 10 bilden die Spulen des Wicklungspakets 15 eine einzige Motorwicklung. Diese einzige Motorwicklung ist mit den Lamellen von jedem der beiden Kollektoren 17, 18 verbunden. Die beiden Kollektoren 17, 18 sind also zueinander parallel geschaltet.

Dies bedeutet, dass bei der ersten Ausführungsform die beiden Kommutatorsysteme des Motors 10 zueinander redundant ausgeführt sind, während die Motorwicklung einfach und damit nicht redundant vorhanden ist. Das eine der beiden Kommutatorsysteme ist also auch dann noch verwendbar, wenn das andere der beiden Kommutatorsysteme einen Defekt aufweist. Wenn somit im Betrieb des Motors 10 ein Defekt beispielsweise im Bereich von einem der beiden Kollektoren 17, 18 auftritt, so kann der Motor 10 trotz des Defekts mit Hilfe des anderen Kollektors 18, 17 weiterbetrieben werden. Entsprechendes gilt für die übrigen Bauteile der beiden Kommutatorsysteme.

Bei einer zweiten Ausführungsform des Motors 10 bilden die Spulen des Wicklungspakets 15 zwei Motorwicklungen.

Diese beiden Motorwicklungen können beispielsweise dadurch realisiert werden, dass zuerst eine erste Motorwicklung auf den Anker 14 gewickelt wird, die die Nuten zum Beispiel bis etwa zur Hälfte auffüllt. Diese erste Motorwicklung wird mit den Lamellen von nur einem der beiden Kollektoren 17, 18 verbunden. In die andere Hälfte der Nuten des Ankers 14 wird dann eine zweite Motorwicklung aufgewickelt, die mit den Lamellen von nur dem anderen Kollektor 17, 18 verbunden wird. Die beiden Motorwicklungen, wie auch die beiden Kollektoren 17, 18, sind somit unabhängig voneinander. Zwischen die beiden Motorwicklungen kann eine Isolationsschicht eingelegt werden.

Es versteht sich, dass die beiden Motorwicklungen auch auf andere Arten realisiert werden können, beispielsweise dadurch, dass einige der Nuten des Ankers 14 der ersten Motorwicklung und die anderen Nuten der zweiten Motorwicklung zugeordnet werden oder dass die Spulen der beiden Motorwicklungen immer abwechselnd in die Nuten des Ankers 14 eingelegt werden.

Unabhängig von der Realisierung bedeutet dies, dass bei der zweiten Ausführungsform nicht nur die beiden Kommutatorsysteme des Motors 10 zueinander redundant ausgeführt sind, sondern dass auch die Motorwicklungen doppelt und damit redundant vorhanden sind. Auf diese Weise stellt der Motor 10 bei der zweiten Ausführungsform letztlich zwei Motorantriebe mit einem gemeinsamen Rotor zur Verfügung.

Die eine Motorwicklung mit dem zugehörigen Kommutatorsystem ist also auch dann noch verwendbar, wenn die andere Motorwicklung und/oder das andere Kommutatorsystem einen Defekt aufweist. Wenn somit im Betrieb des Motors 10 ein Defekt im Bereich von einem der beiden Kommutatorsysteme und/oder im Bereich von einer der beiden Motorwicklungen des Wicklungspakets 15 auftritt, so kann der Motor 10 trotz des Defekts mit Hilfe des anderen Kommutatorsystems und der zugehörigen Motorwicklung weiterbetrieben werden.

Die zweite Ausführungsform eröffnet damit eine Mehrzahl möglicher Betriebsweisen.

So ist es möglich, dass im Normalbetrieb nur eine der beiden Motorwicklungen mit einer Spannung beaufschlagt wird, und dass die andere Motorwicklung nur dann verwendet wird, wenn die für den Normalbetrieb vorgesehene Motorwicklung einen Defekt aufweist. In diesem Fall können die beiden Motorwicklungen gegebenenfalls unterschiedlich ausgebildet sein, insbesondere derart, dass die für den Fehlerfall vorgesehene Motorwicklung weniger Windungen pro Spule und/oder einen geringeren Durchmesser des Wicklungsdrahts aufweist und damit "kleiner" dimensioniert ist als die für den Normalbetrieb vorgesehene Motorwicklung.

Ebenfalls ist es möglich, dass zwei im wesentlichen etwa gleichartige Motorwicklungen vorhanden sind, die im Normalbetrieb parallel oder in Serie geschaltet sind und damit gemeinsam mit einer Spannung beaufschlagt werden, während bei einem Defekt dann die nicht-defekte Motorwicklung bzw. das nicht-defekte Kommutatorsystem weiterverwendet wird.

Eine weitere Möglichkeit besteht darin, dass einer der beiden Kollektoren mit einer größeren Anzahl von Lamellen versehen wird. Damit ist es möglich, dass die zu diesem Kollektor zugehörige Motorwicklung gegebenenfalls mit einer höheren Spannung betrieben werden kann, ohne dass dabei ein sogenanntes Bürstenfeuer entsteht.

Der beschriebene elektrische Motor 10 kann insbesondere bei einem automatischen Türantrieb, beispielsweise bei einer Brandschutztür oder dergleichen, zum Einsatz kommen.

## Patentansprüche

1. Elektrischer Motor (10) mit einer Welle (16), auf der ein mit einer Mehrzahl von Spulen versehenes Wicklungspaket (15) angeordnet ist, sowie mit zwei Kollektoren (17, 18), die auf beiden Seiten des Wicklungspakets (15) auf der Welle (16) angeordnet sind.

2. Elektrischer Motor (10) nach Anspruch 1, wobei die Spulen des Wicklungspakets (15) eine einzige Motorwicklung bilden, und wobei die Spulen der einzigen Motorwicklung mit beiden Kollektoren (17, 18) elektrisch verbunden sind.

3. Elektrischer Motor (10) nach Anspruch 2, wobei zumindest die beiden Kollektoren (17, 18) mit den zugehörigen Bürstenhalterungen und Bürsten jeweils ein Kommutatorsystem bilden, und wobei das eine der beiden Kommutatorsysteme verwendbar ist, wenn das andere der beiden Kommutatorsysteme einen Defekt aufweist.

4. Elektrischer Motor (10) nach Anspruch 1 wobei die Spulen des Wicklungspakets (15) zwei Motorwicklungen bilden, und wobei die Spulen der einen Motorwicklung mit dem einen Kollektor und die Spulen der anderen Motorwicklung mit dem anderen Kollektor elektrisch verbunden sind.

5. Elektrischer Motor (10) nach Anspruch 4, wobei zumindest die beiden Kollektoren (17, 18) mit den zugehörigen Bürstenhalterungen und Bürsten jeweils ein Kommutatorsystem bilden, und wobei die eine Motorwicklung mit dem zugehörigen Kommutatorsystem verwendbar ist, wenn die andere Motorwicklung und/oder das andere Kommutatorsystem einen Defekt aufweist.

6. Elektrischer Motor (10) nach einem der Ansprüche 4 oder 5, wobei in einem Normalbetrieb nur eine der beiden Motorwicklungen mit dem zugehörigen Kommutatorsystem verwendbar ist.

7. Elektrischer Motor (10) nach einem der Ansprüche 4 oder 5, wobei in einem Normalbetrieb beide Motorwicklungen mit den zugehörigen Kommutatorsystemen parallel oder in Serie geschaltet sind.

8. Elektrischer Motor (10) nach einem der Ansprüche 4 bis 7, wobei die Anzahl der Windungen und/oder der Durchmesser des Wicklungsdrahts bei den beiden Motorwicklungen unterschiedlich ist.

9. Elektrischer Motor (10) nach einem der vorstehenden Ansprüche, wobei die beiden Kollektoren (17, 18) im wesentlichen baugleich ausgebildet sind.

10. Elektrischer Motor (10) nach einem der vorstehenden Ansprüche, wobei jeweils eine Bürstenplatte (19, 20) mit Bürstenhalterungen vorgesehen ist, und wobei die beiden Bürstenplatten (19, 20) mit den Bürstenhalterungen im wesentlichen baugleich ausgebildet sind.
